## Europäisches Patentamt
## European Patent Office
## Office européen des brevets

(19)

(11) Numéro de publication: **0 010 496**

**A1**

(12) **DEMANDE DE BREVET EUROPEEN**

(21) Numéro de dépôt: **79400751.8**

(22) Date de dépôt: **15.10.79**

(51) Int. Cl.³: **G 07 C 11/00**

(30) Priorité: **18.10.78 FR 7829693**

(43) Date de publication de la demande:
**30.04.80 Bulletin 80/9**

(84) Etats Contractants Désignés:
**AT BE CH DE FR GB IT LU NL SE**

(71) Demandeur: **Chateau, Michel**
**9, rue Louis David**
**F-75016 Paris(FR)**

(72) Inventeur: **Chateau, Michel**
**9, rue Louis David**
**F-75016 Paris(FR)**

(74) Mandataire: **Gorree, Jean-Michel et al,**
**84, rue d'Amsterdam**
**F-75009 Paris(FR)**

(54) Procédé de dialogue entre un ordinateur et un de ses utilisateurs et application de ce procédé aux paiements bancaires analogues.

(57) L'invention concerne l'établissement d'un dialogue entre un ordinateur et un de ses utilisateurs, à partir d'un nombre code attribué à celui-ci et mémorisé par l'ordinateur.

L'utilisateur reçoit également une série de nombres 8 constitués de chiffres obtenus aléatoirement, ces nombres étant inscrits sur une bande 2, divisée, par des perforations 6, en vignettes détachables 7, l'accès à l'ordinateur étant obtenu en adressant à celui-ci une combinaison du nombre code et d'un nombre de la série.

Application aux paiements bancaires ou analogues effectués par téléphone.

Fig.2.

9230 | 82|12396715 | 83|53622079

EP 0 010 496 A1

Procédé d'échange d'informations entre un ordinateur et un de ses utilisateurs et application de ce procédé aux paiements bancaires ou analogues

L'invention concerne un procédé pour établir un dialogue entre un ordinateur et un utilisateur relié à ce dernier par des moyens de liaison, ainsi que l'application de ce procédé aux paiements bancaires ou analogues, ledit procédé consistant à attribuer à l'utilisateur une combinaison code (fixe ou variable) mémorisée par l'ordinateur.

On connaît déjà différents procédés permettant à un ordinateur d'identifier un de ses utilisateurs et conçus pour minimiser le risque qu'un tiers parvienne, accidentellement ou volontairement, à se substituer à cet utilisateur.

Toutefois, pour la mise en oeuvre de ces procédés connus, on a recours à l'établissement, entre l'ordinateur et ses utilisateurs, de liaisons de types particuliers - par exemple lignes télex - ou de liaisons téléphoniques spéciales - par exemple entre un ordinateur central et des guichets automatisés de distribution d'argent - (par liaisons téléphoniques spéciales, on entend des liaisons filaires de type téléphonique établies entre des points émetteurs et récepteurs déterminés en nombre limité et auxquelles les usagers du réseau téléphonique général n'ont pas accès).

Or, de telles liaisons spécifiques sont d'installation onéreuse et il est inconcevable d'en augmenter le nombre et d'étendre de tels réseaux de manière à permettre l'accès à l'ordinateur à tout utilisateur, où qu'il se trouve.

Par ailleurs, il existe un besoin pressant d'augmenter la sécurité des échanges de valeurs, notamment dans le domaine bancaire : à la longue, l'usage des chèques se révèle en effet propice à la fraude (vol ou perte de chèques ou de chéquiers). En outre, un transfert de fonds nécessite soit l'envoi d'un chèque par la poste, soit le déplacement de l'utilisateur qui doit se rendre dans une agence, ce qui augmente encore les risques de vol ou de perte.

Si le recours à des guichets automatisés de distribution d'argent peut présenter certains avantages notamment quant à la sécurité d'identification de l'utilisateur (clé d'accès telle qu'une carte codée et nombre code d'identification attribué en propre à l'utilisateur), les inconvénients sont toutefois loin d'être négligeables : difficulté de mémorisation du nombre code d'identification personnel, possibilité de perte simultanée de la carte et dudit nombre code, obligation pour l'utilisateur de se rendre à un guichet automatique.

L'invention a donc essentiellement pour but de pallier les inconvénients des procédés actuellement connus et de proposer un procédé qui évite tout déplacement de l'utilisateur lorsque celui-ci veut avoir accès à l'ordinateur, qui permette d'assurer une sécurité aussi élevée que souhaitée de l'identification de l'utilisateur par l'ordinateur, qui n'exige pas de l'utilisateur un entraînement particulier et qui, enfin, puisse être mis en oeuvre avec des moyens simples et peu onéreux.

A ces fins, le procédé de l'invention se caractérise en ce que :

- on fait effectuer, par l'utilisateur, au moins une opération entre cette combinaison code et une combinaison variable aléatoire ou pseudo-aléatoire préétablie, l'ordinateur étant programmé pour pouvoir effectuer éventuellement cette même opération,

- on établit une liaison téléphonique ordinaire entre l'utilisateur et l'ordinateur,

- et l'utilisateur transmet à l'ordinateur, par cette liaison téléphonique ordinaire, le résultat de la susdite opération pour permettre à l'ordinateur de comparer ce résultat avec ses propres informations, de conclure à l'identité, et enfin de permettre à l'utilisateur d'introduire dans l'ordinateur les données de son choix,

- ce grâce à quoi on obtient une fiabilité de l'identification de l'utilisateur par l'ordinateur qui repose, non plus sur la seule combinaison code, mais sur une combinaison qui peut être rendue pratiquement inaccessible aux tiers grâce au choix de la combinaison aléatoire ou pseudo-aléatoire et au choix de l'opération effectuée, fiabilité qui permet de tolérer les indiscrétions toujours possibles sur le réseau

télé...que ordinaire et sur les moyens d'accès à ce réseau.

La mise en oeuvre du procédé de l'invention repose donc fondamentalement sur l'établissement d'une liaison téléphonique ordinaire (c'est-à-dire appartenant au réseau téléphonique général et susceptible d'être obtenue à partir de n'importe quel poste d'abonné ou public). De ce fait, l'utilisateur qui souhaite accéder à l'ordinateur compose simplement le ou un numéro téléphonique d'appel de l'ordinateur sur le poste de téléphone qu'il a à sa disposition : aucun déplacement n'est nécessaire pour se rendre à une zone d'échange préétablie (agence ou guichet automatique dans le cas du domaine bancaire) et tout risque de vol ou de perte est ainsi écarté ; en outre, les inconvénients résultant de la difficulté d'accès de ladite zone d'échange préétablie (agence éloignée, utilisateur malade ou invalide) sont également éliminés.

Pour écarter tout risque d'indiscrétion (volontaire ou involontaire) toujours possible sur le réseau téléphonique général et sur les moyens d'accès à ce réseau, il est nécessaire que la sécurité d'identification de l'utilisateur par l'ordinateur soit attribuée, non plus aux seuls moyens d'accès ou de liaison, mais à différentes clés dont seuls auront connaissance l'utilisateur et l'ordinateur.

Dans ces conditions, on a recours, outre à une combinaison code, d'une part, à une combinaison aléatoire ou pseudo-aléatoire (c'est-à-dire à une combinaison de signes sélectionnés de façon aléatoire ou pseudo-aléatoire, étant entendu qu'il s'agit d'une façon plus générale d'une sélection effectuée sans avoir recours à une loi particulière reconnaissable) et, d'autre part, à une opération effectuée entre ladite combinaison code et ladite combinaison aléatoire ou pseudo-aléatoire : de ce fait, l'information transmise en ligne par l'utilisateur vers l'ordinateur peut être rendue aussi complexe que souhaitée, d'une part, en constituant les combinaisons utilisées avec un grand nombre de signes et, d'autre part, en effectuant l'opération considérée avec un opérateur complexe ou une succession complexe d'opérateurs.

4                                              001049€

On est ainsi assuré d'une double sécurité :

- sécurité contre les indiscrétions en ligne, puisque - compte tenu de la sélection aléatoire ou pseudo-aléatoire des signes de la combinaison variable préétablie, de l'opération effectuée et du nombre de signes des combinaisons - aucun tiers indiscret ne sera à même de retrouver la combinaison code,

- sécurité contre la perte ou le vol, puisque la connaissance de l'une des trois composantes, combinaison code/combinaison aléatoire/opération, ne suffit pas pour accéder à l'ordinateur.

En outre, la sécurité est accrue par le fait que la combinaison aléatoire ou pseudo-aléatoire utilisée est variable, c'est-à-dire différente pour chaque processus d'accès à l'ordinateur : de la sorte, la connaissance par un tiers du résultat de l'opération transmis à l'ordinateur ne permet pas à ce tiers d'accéder par la suite à l'ordinateur.

Selon un premier aspect du procédé de l'invention, la combinaison aléatoire ou pseudo-aléatoire est préétablie en fonction du résultat de l'opération qui a été effectuée lors de l'accession précédente de l'utilisateur à l'ordinateur.

Selon un second aspect du procédé de l'invention, la combinaison aléatoire ou pseudo-aléatoire est préétablie de la manière suivante :

- en faisant établir au moins une série de combinaisons aléatoires ou pseudo-aléatoires,

- en attribuant en clair (avec ou sans transformation) à l'utilisateur les combinaisons de cette série dans un certain ordre,

- et en mémorisant les combinaisons de cette série dans l'ordinateur (avec ou sans transformation) dans le même ordre.

A cet effet, on fait établir au moins une série de combinaisons aléatoires ou pseudo-aléatoires $N_1$, $N_2$ ..., ces combinaisons étant par la suite dénommées $N_i$ (i = 1, 2 ...).

En outre, on attribue à l'utilisateur en clair, c'est-à-dire par écrit, les combinaisons $N_i$ (combinaisons d'identification) ainsi que la combinaison code Z qui lui est affectée (et que l'utilisateur peut éventuellement avoir choisie, la combinaison code peut être constituée du même nombre de signes que les combinaisons $N_i$ et ces signes sont de même nature que ceux des combinaisons $N_i$ (par exemple des lettres ou des chiffres). Il est souhaitable que l'utilisateur possède en mémoire cette combinaison code ou tout au moins que, s'il la conserve par écrit, cet écrit ne soit pas conservé avec l'écrit sur lequel sont portées les combinaisons $N_i$. De la sorte, un tiers venant à avoir connaissance sans y être autorisé soit des combinaisons $N_i$, soit de la combinaison code Z, ne pourra pas être en mesure d'établir un dialogue avec l'ordinateur.

En outre, il faut noter que les combinaisons $N_i$ sont attribuées à l'utilisateur soit telles quelles, soit après leur avoir fait subir une transformation dont un exemple sera donné ultérieurement.

Par ailleurs, on introduit en mémoire dans l'ordinateur, également avec ou sans transformation, les combinaisons $N_i$ et la combinaison code Z.

Les combinaisons $N_i$ sont attribuées à l'utilisateur et introduites dans l'ordinateur en respectant l'ordre i = 1, 2, 3, etc.

Dans ce cas, selon une première variante, on attribue à l'utilisateur et mémorise dans l'ordinateur la série de combinaisons $N_i$ sans que celles-ci subissent une quelconque transformation.

On attribue également à l'utilisateur et on mémorise dans l'ordinateur une combinaison clé C qui est distincte de la combinaison code Z et qui est caractéristique de l'utilisateur, c'est-à-dire qu'elle est attribuée en propre à un utilisateur déterminé pour toute la durée de temps pendant laquelle l'utilisateur sera autorisé à utiliser l'ordinateur (dans une application préférée, il s'agit d'un numéro de compte bancaire).

Pour se faire identifier par l'ordinateur, l'utilisateur adresse à celui-ci, par l'intermédiaire des susdits moyens de liaison, la combinaison clé C ; et ce n'est qu'ensuite qu'il transmet à l'ordinateur l'information résultant de l'opération effectuée avec une combinaison $N_i$ et la combinaison code Z.

Lorsque l'ordinateur a reçu la combinaison C, il sélectionne les informations relatives à l'utilisateur auquel est affectée ladite combinaison C, c'est-à-dire la combinaison d'identification $N_i$ et la combinaison code Z ; puis il effectue lui-même l'opération avec toutes les combinaisons $N_i$ et la combinaison code Z, jusqu'à ce qu'il trouve le résultat correspondant à l'information envoyée par l'utilisateur.

Si l'ordinateur trouve le résultat adéquat, il permet alors l'accession de l'utilisateur en transmettant à celui-ci un signal prédéterminé (signal sonore, ou de préférence autorisation orale préalablement enregistrée sur bande magnétique) pour que l'utilisateur introduise alors les données de son choix.

Par contre, si parmi les résultats obtenus par l'ordinateur ne figure pas un résultat identique à l'information adressée par l'utilisateur (erreur de l'utilisateur ou tiers tentant d'accéder frauduleusement à l'ordinateur par exemple), l'ordinateur refuse alors l'accession.

Le recours à une combinaison supplémentaire - la combinaison C - a essentiellement pour but de permettre à l'ordinateur de sélectionner dans sa mémoire les informations $N_i$ et Z relatives à un utilisateur déterminé parmi toutes les informations équivalentes relatives à l'ensemble des utilisateurs autorisés à avoir accès à l'ordinateur.

Mais on peut noter que la combinaison C constitue en outre une information supplémentaire qui contribue à augmenter la fiabilité de l'identification en rendant plus difficile l'accession à un code donné de tout tiers qui ne connaîtrait pas ladite combinaison clé C.

Selon une autre variante, on attribue à l'utilisateur la série de combinaisons de signes après avoir fait subir à celles-ci une transformation à l'aide d'un opérateur $\cap$.

Si on désigne toujours par $N_i$ (i = 1, 2 ...) les combinaisons de la série initiale, ou première série, la série de combinaisons attribuées à l'utilisateur, ou seconde série, est constituée de combinaisons $N_i$ (i = 1, 2 ...) élaborées par une opération effectuée, au moyen de l'opérateur, avec les combinaisons respectives $N_i$ de la première série et la

combinai~ ~ ~c~e Z.

De ~ ~it :

$$N'_i = N_i \cap Z$$

On introduit en mémoire dans l'ordinateur, et dans l'ordre $i = 1, 2 \ldots$, les combinaisons $N_i$ de la première série telles quelles, donc sans transformation.

On attribue à l'utilisateur la seconde série de combinaisons $N'_i$ et la combinaison code Z.

On met en oeuvre des moyens de liaison entre l'utilisateur et l'ordinateur sur lesquels l'utilisateur introduit une information élaborée par l'opération inverse de l'opération précédemment mentionnée, donc avec un opérateur $\bar{\cap}$, et effectuée avec une des combinaisons $N'_i$ de la seconde série et la combinaison code Z.

De ce fait, l'information en question est :

$$N'_i \,\bar{\cap}\, Z$$

qui n'est autre que $N_i$.

L'ordinateur, ayant reçu l'information $N'_i \,\bar{\cap}\, Z$, compare celle-ci avec les données qu'il possède en mémoire, ce qui lui permet d'identifier l'utilisateur et d'accorder à celui-ci l'accession en lui transmettant un signal prédéterminé pour que, par les susdits moyens de liaison, l'utilisateur introduise dans l'ordinateur les données de son choix.

De ce fait, en prévoyant que chaque combinaison $N_i$ de la première série n'est disponible que pour un utilisateur et un seul, tout au moins pendant une période de temps déterminée, il est possible à l'ordinateur d'identifier, avec une sécurité aussi grande que souhaitée, l'utilisateur qui s'adresse à lui.

En outre, du fait que les signes constitutifs des combinaisons $N_i$ sont sélectionnés sans avoir recours à une loi particulière reconnaissable par un tiers, les combinaisons $N'_i$ sont également constituées de signes n'obéissant à aucune loi particulière reconnaissable par un tiers.

Ce second aspect du procédé de l'invention permet donc également l'identification de l'utilisateur avec une fiabilité aussi élevée que souhaitée.

Si besoin en est, les moyens de liaison peuvent être combinés avec des moyens transformateurs permettant la

8

001049 6

transformation de l'information introduite par l'utilisateur en signaux transmissibles par les moyens de liaison et/ou permettant à l'utilisateur d'effectuer facilement l'opération envisagée lorsque les opérateurs $\Pi$ ou $\overline{\Pi}$ sont complexes.

Bien entendu, ces exemples de moyens transformateurs ne sont pas limitatifs et ces moyens peuvent être prévus aussi bien côté utilisateur que côté ordinateur des moyens de liaison.

Pour accroître encore la sécurité, on prévoit que les combinaisons $N_i$ ou $N_i$ et $N'_i$ sont utilisées dans un ordre déterminé, de préférence dans l'ordre i = 1, 2 ... sans répétition ni omission. De ce fait, l'utilisateur emploie à chaque fois la première combinaison $N_i$ ou $N'_i$ non encore utilisée et l'ordinateur refuse toute information lui parvenant qui n'est pas la première combinaison $N_i$ non encore utilisée qu'il possède en mémoire.

De la sorte, on empêche qu'un tiers, qui a eu connaissance d'une ou de plusieurs combinaisons $N_i$, sauf la première non utilisée de la série, ou bien d'une ou de plusieurs combinaisons $N'_i$, sauf la première non utilisée, et la combinaison code Z, puisse obtenir l'accès à l'ordinateur.

Pour empêcher les tiers de retrouver la séquence de distribution des signes servant à constituer les combinaisons, il est souhaitable que ces signes soient sélectionnés de façon aléatoire.

Si l'on souhaite augmenter encore la sécurité, il est possible de faire en sorte que l'opérateur $\Pi$ (et donc $\overline{\Pi}$ ) soit différent pour chaque utilisateur, ou tout au moins pour des groupes d'utilisateurs. De la sorte, un tiers, même ayant eu connaissance des combinaisons et des combinaisons codes attribuées à plusieurs utilisateurs, n'est pas en mesure de se substituer facilement et successivement à ces derniers.

Cette solution devient particulièrement intéressante lorsque le nombre d'opérateurs $\Pi$ est élevé et que chaque utilisateur a à sa disposition, faisant par exemple partie des moyens transformateurs mentionnés plus haut, un appareil susceptible d'effectuer automatiquement l'opération $\Pi$ ou $\overline{\Pi}$

sous le contrôle de l'utilisateur.

Il est également possible de faire en sorte que le nombre code Z ne soit attribué à l'utilisateur que pour une durée de temps limitée et soit modifié périodiquement, par exemple tous les ans.

D'une façon avantageuse, les signes sont des chiffres, de préférence décimaux, et les combinaisons $N_i$, $N_i'$, Z et C sont des nombres, de préférence du système décimal ou encore binaire.

Dans ces conditions, l'opération envisagée précédemment est une opération mathématique, de préférence arithmétique, telle qu'une addition afin que l'utilisateur puisse correspondre facilement avec l'ordinateur.

Toutefois, on comprend aisément que l'opérateur $\bigcap$ peut être choisi aussi compliqué que souhaité parmi tous les opérateurs mathématiques que l'on peut imaginer, ce qui ne pose aucun problème pour l'utilisateur si celui-ci dispose d'un appareil approprié : l'utilisateur introduit alors les données $N_i$ ou $N_i'$ et Z dans l'appareil, ainsi que le type d'opérateur $\bigcap$ ou $\overline{\bigcap}$ à utiliser, et c'est l'appareil qui établit alors l'information $N_i \bigcap Z$ ou $N_i' \overline{\bigcap} Z$ qu'il envoie éventuellement directement dans la ligne téléphonique ordinaire.

Dans le cas où l'opérateur $\bigcap$ ou $\overline{\bigcap}$ est une simple addition, l'utilisateur n'a pas besoin d'un appareil particulier et l'effectue lui-même.

Dans ce cas, on peut envisager que l'opérateur $\bigcap$ ou $\overline{\bigcap}$ soit une addition d'un type particulier, par exemple une addition effectuée sans tenir compte des retenues ou reports de dizaines.

On va maintenant décrire à titre d'exemple - car c'est dans ce cas que l'invention semble devoir présenter le plus d'intérêt - l'application du procédé aux paiements bancaires ou analogues effectués à distance, par l'intermédiaire d'une liaison téléphonique ordinaire. Dans cette description, on se réfère aux dessins annexés sur lesquels :

- la figure 1 représente un distributeur de vignettes portant chacune une combinaison aléatoire ou pseudo-aléatoire,

- la figure 2 représente une partie de bande délivrée par le distributeur de la figure 1,

- la figure 3 est une représentation très schématique d'une

001049€

installation pour la mise en oeuvre du procédé de l'invention, et

- la figure 4 est un schéma d'une partie de l'installation de la figure 3.

L'utilisateur dispose d'une série de nombres $N_i$, dont les chiffres constitutifs ont été sélectionnés de façon aléatoire ou pseudo-aléatoire (les nombres $N_i$ seront dénommés ci-après "nombres aléatoires"), ainsi que du nombre code $Z$.

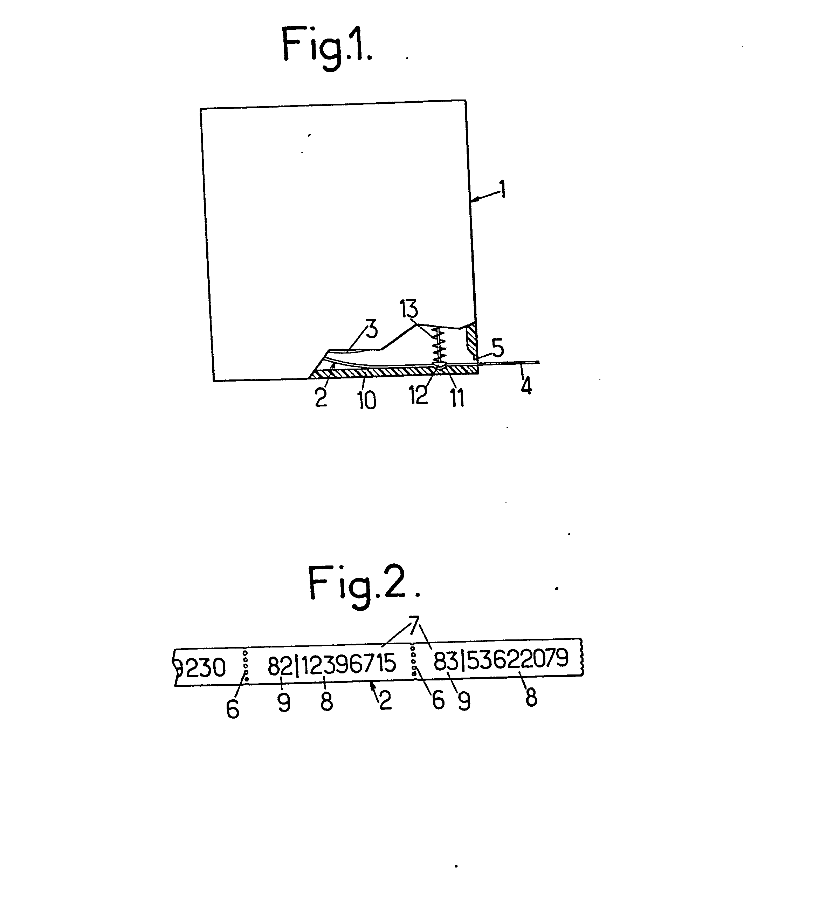

La série de nombres $N_i$ est imprimée sur une bande, par exemple en papier, disposée dans une boîte appropriée ou cassette, telle que celle représentée sur la figure 1.

Dans la cassette 1, la bande 2 est disposée sous forme d'un rouleau 3 dont l'extrémité libre 4 peut être tirée par une ouverture en forme de fente 5 pratiquée dans la cassette 1.

Comme représenté sur la figure 2, la bande 2 est divisée, à l'aide de perforations 6 ou de moyens équivalents, en vignettes 7 détachables.

Sur chaque vignette 7 est imprimé un nombre 8, dont les chiffres ont été obtenus de façon aléatoire comme expliqué précédemment, ainsi qu'éventuellement un numéro d'ordre 9, indiquant l'emplacement de la vignette correspondante dans la bande.

Dans la cassette 1, en amont de la fente 5, la paroi 10 le long de laquelle se déroule la bande 2 présente une encoche 11 dans laquelle la bande 2 est pressée sous l'action d'un doigt 12 repoussé élastiquement par un ressort 13. Grâce à cet agencement, il est impossible de réintroduire dans la cassette une portion de bande qui a été tirée. On évite ainsi qu'un tiers, qui aurait la cassette momentanément à sa disposition, déroule la bande pour prendre connaissance des nombres qui y sont inscrits, puis réintroduise la bande dans la cassette.

Bien entendu, d'autres dispositions peuvent être adoptées sans sortir du cadre de l'invention. En particulier, les nombres aléatoires peuvent être inscrits transversalement sur la bande ; la bande peut être disposée en zig-zag dans la cassette : des moyens, tels qu'un axe avec cliquet anti-retour et muni d'un bouton moleté situé à l'extérieur de la cassette, peuvent être prévus pour faciliter le déroulement de la bande.

Outre ces données, l'utilisateur est également en possession d'un numéro de compte bancaire ou analogue (combinaison clé C précédemment mentionnée) et d'un nombre code Z, ainsi que d'un numéro de téléphone lui permettant d'appeler un ordinateur de sa banque.

Cet ordinateur possède en mémoire toutes les informations susmentionnées, c'est-à-dire le numéro de compte de l'utilisateur ainsi que le nombre code et la série de nombres aléatoires attribués à celui-ci.

Ayant à sa disposition un appareil téléphonique standard, l'utilisateur compose le numéro téléphonique le mettant en communication avec l'ordinateur.

Une fois la communication téléphonique établie, toute nouvelle composition d'indicatif sur le cadran ou le clavier à touches de l'appareil téléphonique provoque la transmission d'un train d'impulsions qui sont reçues par le destinataire, en l'occurence l'ordinateur, qui peut alors exploiter ces signaux pour recueillir une information adéquate de toute façon connue de l'homme de l'art.

Ceci étant, la communication téléphonique étant établie avec l'ordinateur, l'utilisateur compose sur le cadran ou le clavier de son appareil son numéro de compte.

Ensuite, il compose, toujours sur l'appareil téléphonique, un nombre obtenu en additionnant le nombre code Z et le premier nombre aléatoire $N_i$ qui n'a pas encore été utilisé.

L'ordinateur, à la réception du numéro de compte C, est déjà informé de l'identité du demandeur. Pour procéder à la vérification de cette identité, il appelle en mémoire le nombre code Z et le premier nombre aléatoire $N_i$ non encore utilisé qui sont associés au numéro de compte C. Puis, il effectue de son côté l'addition $N_i + Z$ ("nombre de passe").

Si le résultat ainsi obtenu n'est pas identique à l'information envoyée par l'utilisateur, il refuse la poursuite du processus et en informe l'utilisateur. En effet, soit l'utilisateur s'est trompé en effectuant son opération, soit le nombre $N_i$ et/ou le nombre code sont erronés (par exemple le nombre $N_i$ employé n'est pas le premier nombre aléatoire non encore utilisé, ou bien le nombre aléatoire et le nombre code employés ne sont pas attribués au même compte, etc.).

De la sorte, on évite qu'un tiers, ne possédant que certaines informations, ou même ne possédant aucune information, puisse accéder à un compte en procédant par tâtonnements et éliminations successives.

Si, par contre, le résultat obtenu par l'ordinateur coïncide avec l'information envoyée par l'utilisateur, l'ordinateur transmet à celui-ci un signal de poursuite du processus, par exemple à l'aide d'un message parlé enregistré sur bande magnétique ordonnant à l'utilisateur de passer à l'étape suivante.

Par exemple, s'il s'agit d'effectuer un règlement par voie bancaire, l'utilisateur adresse à l'ordinateur, en composant les nombres correspondants sur le cadran téléphonique, le numéro du compte à créditer, la somme à verser, éventuellement des références de facture ou autres, etc.

On notera qu'entre chaque étape du dialogue, que ce soit pour l'identification de l'utilisateur ou pour l'opération bancaire proprement dite, l'ordinateur peut établir un dialogue avec l'utilisateur par exemple pour confirmer les données reçues et/ou préciser ce que l'utilisateur doit faire, à l'aide de messages parlés enregistrés sur bande magnétique et mis en fonctionnement de façon adéquate.

Il est également possible d'attribuer au compte de l'utilisateur, non pas un seul numéro, mais deux numéros. Le premier numéro C serait alors réservé aux paiements effectués par l'utilisateur et le second numéro C' serait réservé aux versements effectués par des tiers sur le compte de l'utilisateur. De ce fait, seul le second numéro C' serait connu des tiers (par exemple mentionné sur le papier à en-tête de l'utilisateur) tandis que le premier numéro C pourrait normalement rester connu seulement de l'utilisateur.

Par conséquent, un tiers, qui n'a normalement pas connaissance du premier numéro de compte C, ne pourrait pas effectuer de prélèvements sur le compte de l'utilisateur, et la sécurité s'en trouverait encore accrue.

Dans le cas de la mise en oeuvre du procédé de l'invention considéré sous son second aspect, l'utilisateur procède

13 001049C

sensiblement de la même manière que précédemment, à ceci près que les informations à transmettre à l'ordinateur aux fins d'identification sont moins nombreuses que dans le cas décrit plus haut.

En effet, une fois établis les nombres aléatoires $N_i$, on communique à l'utilisateur la suite de nombres $N'_i$ tels que $N'_i = N_i - Z$, l'ordinateur n'ayant toutefois en mémoire que les seuls nombres $N_i$.

Lorsque l'utilisateur, souhaitant être identifié par l'ordinateur, effectue l'opération qui lui est prescrite, il compose le nombre $N'_i + Z$ qui n'est autre que $N_i$.

Les étapes suivantes peuvent alors être les mêmes que celles mentionnées plus haut.

Selon un autre aspect de l'invention, la combinaison aléatoire ou pseudo-aléatoire utilisée est préatablie en fonction du résultat de l'opération qui a été effectuée lors de l'accession précédente à l'ordinateur.

La combinaison peut être purement et simplement ledit résultat, sans aucune transformation. Mais elle peut également résulter d'une manipulation effectuée sur ce résultat, par exemple une opération (distincte de l'opération $\cap$ précédemment mentionnée).

La sécurité repose, dans ce cas, sur l'existence d'une seule combinaison (le résultat de l'opération effectuée au cours de l'accession précédente), et non plus d'une série de combinaisons, d'où l'absence de risque de perte de la cassette précédemment décrite. Le caractère aléatoire ou pseudo-aléatoire de la combinaison est conservé si les signes constitutifs de la combinaison utilisée lors de la première accession à l'ordinateur ont été sélectionnés de façon aléatoire ou pseudo-aléatoire.

En se référant à l'ensemble des figures 1 à 4, on va maintenant décrire une mise en oeuvre préférée du procédé de l'invention.

Pour effectuer un paiement, l'utilisateur prend la cassette 1 (fig. 1) qui lui a été remise et tourne le bouton moleté pour faire sortir la première vignette. Cette vignette diffère quelque peu de celle représentée à la fig. 2. Elle comporte deux lignes imprimées : la ligne supérieure porte à gauche un numéro d'ordre de OO à 99 et à droite un nombre d'identification à 9 chiffres ; la ligne inférieure porte à gauche le mot "secret" imprimé et la partie droite reste vierge pour que l'utilisateur y inscrive, sous les cinq ou six derniers chiffres de droite du nombre d'identification, les cinq ou six chiffres de son code secret Z. Il fait l'addition des deux nombres, en inscrit la somme sur un autre papier, et détruit sa vignette ; il obtient ainsi un résultat qui doit lui ouvrir l'accès à l'ordinateur. Bien entendu, l'utilisateur peut effectuer la même préparation avec une petite calculatrice.

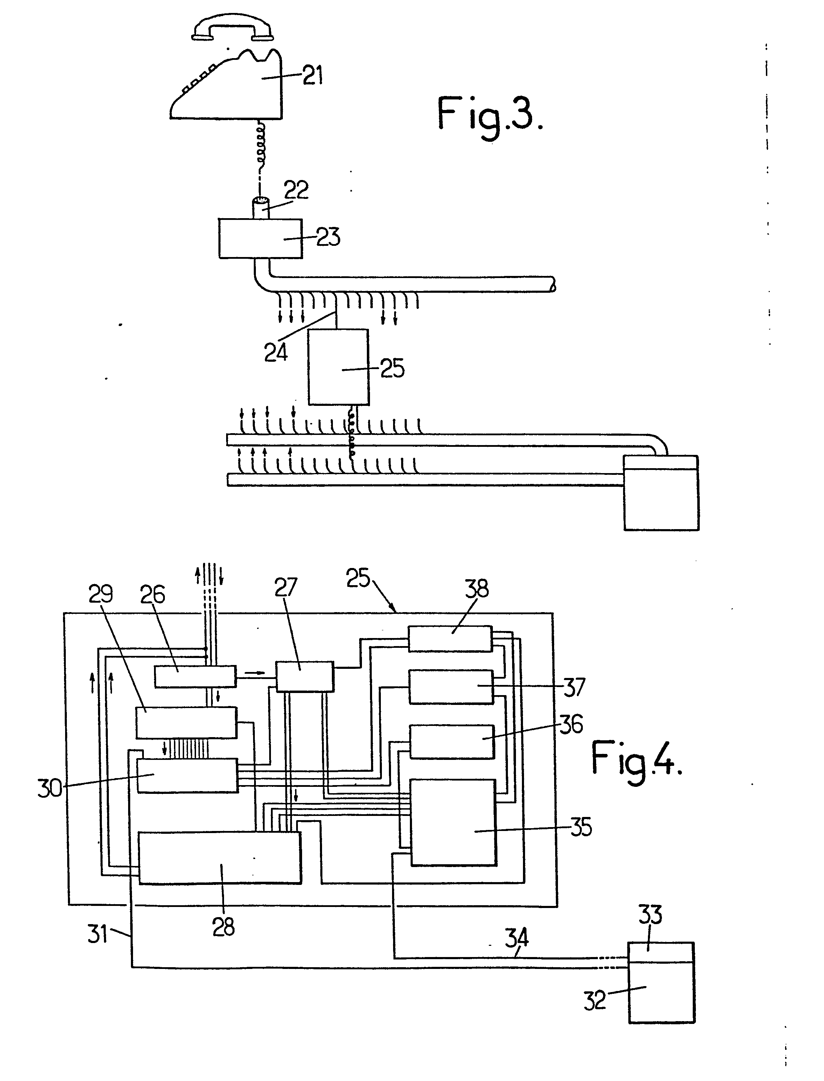

L'utilisateur décroche alors son téléphone 21 (fig. 3) dont on supposera dans cet exemple, pour simplifier la description, qu'il est à touches et dépend d'un central électronique "à fréquences vocales", et l'utilisateur compose le numéro d'appel de l'ordinateur qui tient son compte. Ce numéro correspond à un certain nombre de "lignes groupées" 22 et, grâce à un dispositif distributeur des lignes groupées 23, l'utilisateur est mis en communication avec l'une, 24, de ces lignes. Chacune des lignes telles que 24 aboutit à un miniordinateur ou unité de télévirement 25. Les unités de télévirement sont disposées côte à côte et en plusieurs étages dans une salle ou une armoire protégée, la mémoire centrale commune à un certain nombre d'unités de télévirement étant de préférence dans une autre armoire ou un autre local protégé.

Dès que la ligne 24 reçoit l'appel d'un utilisateur, un dispositif de branchement 26, analogue à celui bien connu des répondeurs téléphoniques, la connecte à l'unité de télévirement 25 et déclenche le programmeur 27 ainsi que, pour un tour, un support magnétophonique 28 qui transmet à l'utilisateur les coordonnées du miniordinateur ou unité de télévirement 25 et des instructions sur l'étape à entreprendre. L'utilisateur compose alors, toujours sur les touches du clavier de son poste téléphonique, les quatre chiffres qui permettent d'identifier 10 000 comptes dépendant d'une mémoire, et 120 lignes groupées par exemple avec 120 unités de télévirement servent cet ensemble.

Les fréquences vocales émises lors de la frappe des touches sont analysées dans l'unité de télévirement 25 par un organe convertisseur 29 qui les transforme en 12 signes
digitaux (10 chiffres et 2 signes, ∗ et #) selon un processus
bien connu en télématique déjà largement utilisé dans l'industrie. Les dix signes représentant les chiffres.sont répétés chiffre par chiffre, immédiatement après leur identification, par un synthétiseur de voix ou un dispositif magnétophonique, d'où contrôle auditif par l'utilisateur de ce que
l'unité de télévirement a réceptionné et interprété ; simultanément, des signaux ultrasoniques sont traduits (par un
émetteur de n'importe quel type connu en soi déjà disponible
dans la technique considérée) en impulsions capables de commander, via la ligne téléphonique 24, soit un téléscripteur
couplé au téléphone, soit l'allumage d'un dispositif optoélectronique de visualisation (à tubes, à diodes électroluminescentes, à cristaux liquides, ou autres) ; enfin, les
signaux représentant le numéro de compte à quatre chiffres
sont enregistrés sur une mémoire d'attente 30, puis, sauf
intervention d'un signal de correction, transmis par les
fils 31 jusqu'aux processeurs 32 de la mémoire centrale 33,
de manière à extraire de l'emplacement correspondant au
compte de ce numéro un certain nombre de données qui sont :
– une clé de deux ou trois chiffres qui seront lus par le
dispositif magnétophonique ou synthétiseur de voix et vont
permettre à l'utilisateur de reconnaître que c'est vraisemblablement son compte qui a été sélectionné ;
– le nombre aléatoire (ou pseudo-aléatoire) à neuf chiffres
d'identification de la prochaine communication d'ordres à
donner à l'unité de télévirement, en principe celle qui
commence ;
– le code Z secret individuel ;
– le solde du compte à cet instant.

     Ces données recueillies par les têtes de lecture sont
immédiatement transmises par le fil 34 jusqu'à des emplacements prédéterminés d'une mémoire temporaire vierge 35 de
l'unité de télévirement qui gère cette communication, tandis
que le solde du compte est directement envoyé dans un premier
totalisateur électronique 36.

     La fourniture de ces informations à la mémoire de l'unité de télévirement déclenche :

1°) l'énoncé, par le synthétiseur de voix ou le dispositif magnétophonique, de la clé : deux ou trois chiffres de présomption d'identité ;

2°) aussitôt après, un tour de support magnétique envoyant dans la ligne un courant modulé invitant l'utilisateur, par le canal de son écouteur, à transmettre le résultat de l'opération qu'il vient d'effectuer ;

3°) la soustraction de zéro, par un second totalisateur électronique 37, du code Z secret individuel à cinq ou six chiffres.

L'utilisateur compose alors sur son clavier téléphonique les neuf chiffres du résultat de son opération, qui sont enregistrés par l'unité de télévirement comme nombre à additionner dans le totalisateur 37, immédiatement répétés en phonie et en fréquences ultrasoniques pour contrôle par l'utilisateur, comme ci-dessus. Dès le neuvième chiffre de ce nombre enregistré, un comparateur 38 compare le résultat du totalisateur 37 avec le nombre d'identification parvenu en mémoire.

S'il n'y a pas identité, c'est que l'interlocuteur n'est pas le titulaire du compte, ou bien qu'il a commis une erreur. La non-identité déclenche donc en phonie, comme ci-dessus, l'émission d'un signal invitant l'utilisateur à vérifier ses informations et à rappeler. La communication est alors coupée.

S'il y a identité, le comparateur 38 provoque l'émission d'un signal invitant l'utilisateur à poursuivre la procédure, par exemple à composer le numéro du compte à créditer, ce qui implique que le client est bien identifié et que l'unité de télévirement accepte ses ordres. Simultanément, il remet à zéro l'enregistreur 30.

Si, par suite d'une fausse manoeuvre ou d'une mauvaise transmission de la ligne, l'utilisateur constate par le système répétitif (auditif ou visuel) qu'une erreur s'est glissée en inscrivant les nombres (numéro de compte, nombre de passe, etc.), il appuie sur la touche * qui remet à zéro l'enregistreur 30 qui est ainsi prêt à recevoir le nombre corrigé.

Compte tenu de ce qui précède, on notera que la fiabilité d'identification de l'utilisateur par l'ordinateur n'est fonction que du nombre de chiffres constituant les nombres aléatoires, le nombre code et, éventuellement, le nombre clé ou numéro de compte.

Par exemple, des nombres de huit chiffres permettent d'obtenir un taux de sécurité de 1 pour 100 millions, c'est-à-dire qu'un tiers essayant toutes les combinaisons possibles n'a qu'une seule chance sur 100 millions, à chaque tentative, de trouver le nombre aléatoire correct pour accéder à un compte tenu par l'ordinateur.

Bien entendu, il est possible de choisir des nombres de n'importe quelle autre composition, en fonction des applications particulières envisagées.

Par mise en oeuvre du procédé de l'invention, il est possible de parvenir à une sécurité aussi élevée que souhaitée de l'identification d'un utilisateur par l'ordinateur, sans avoir recours à une clé du genre carte de crédit, ni à un terminal spécial entrée-sortie des informations échangées, ni à une liaison filaire de type particulier. De plus, le message est élaboré entièrement par l'utilisateur (à l'aide si besoin est d'une calculatrice) ou d'un stock d'informations reçues indéfiniment à l'avance, sans tenir compte d'informations élaborées par l'ordinateur extemporanément.

Comme il va de soi, et comme il résulte d'ailleurs déjà de ce qui précède, l'invention ne se limite nullement à ceux de ses modes d'application et de réalisation qui ont été plus spécialement envisgés ; elle en embrasse, au contraire, toutes les variantes.

0010496

REVENDICATIONS

1 - Procédé de dialogue entre un ordinateur et un utilisateur relié à ce dernier par des moyens de liaison, consistant à attribuer à l'utilisateur une combinaison code (fixe ou variable) mémorisée par l'ordinateur, caractérisé en ce que, pour augmenter la fiabilité de l'identification de l'utilisateur par l'ordinateur,

- on fait effectuer, par l'utilisateur, au moins une opération entre cette combinaison code et une combinaison variable aléatoire ou pseudo-aléatoire préétablie, l'ordinateur étant programmé pour pouvoir effectuer éventuellement cette même opération,

- on établit une liaison téléphonique ordinaire entre l'utilisateur et l'ordinateur,

- et l'utilisateur transmet à l'ordinateur, par cette liaison téléphonique ordinaire, le résultat de la susdite opération pour permettre à l'ordinateur de comparer ce résultat avec ses propres informations, de conclure à l'identité, et enfin de permettre à l'utilisateur d'introduire dans l'ordinateur les données de son choix,

- ce grâce à quoi on obtient une fiabilité de l'identification de l'utilisateur par l'ordinateur qui repose, non plus sur la seule combinaison code, mais sur une combinaison qui peut être rendue pratiquement inaccessible aux tiers grâce au choix de la combinaison aléatoire ou pseudo-aléatoire et au choix de l'opération effectuée, fiabilité qui permet de tolérer les indiscrétions toujours possibles sur le réseau téléphonique ordinaire et sur les moyens d'accès à ce réseau.

2 - Procédé selon la revendication 1, caractérisé en ce que la combinaison aléatoire ou pseudo-aléatoire est préétablie,

- en faisant établir au moins une série de combinaisons aléatoires ou pseudo-aléatoires,

- en attribuant en clair (avec ou sans transformation) à l'utilisateur les combinaisons de cette série dans un certain ordre,

- et en mémorisant les combinaisons de cette série dans l'ordinateur (avec ou sans transformation) dans le même ordre.

3 - Procédé selon la revendication 1, caractérisé en ce que la combinaison aléatoire ou pseudo-aléatoire est préétablie en fonction du résultat de l'opération qui a été effectuée lors de l'accession précédente de l'utilisateur à l'ordinateur.

4 - Procédé selon la revendication 2, caractérisé en ce qu'on attribue à l'utilisateur et mémorise dans l'ordinateur la série de combinaisons aléatoires ou pseudo-aléatoires, sans transformation, en ce qu'on attribue à l'utilisateur une combinaison clé (distincte de la combinaison code) mémorisée par l'ordinateur, et en ce que l'utilisateur transmet ladite combinaison clé à l'ordinateur avant de lui adresser l'information élaborée par la susdite opération, l'ordinateur effectuant de son côté la même opération que l'utilisateur avec les informations qu'il possède en mémoire.

5 - Procédé selon la revendication 2, caractérisé en ce qu'on fait établir par l'ordinateur une seconde série de combinaisons aléatoires ou pseudo-aléatoires, chacune de ces combinaisons étant élaborée par une opération effectuée avec la combinaison aléatoire ou pseudo-aléatoire correspondante de la première série et la combinaison code, en ce qu'on attribue à l'utilisateur la seconde série de combinaisons dans l'ordre résultant de l'ordre de la première série de combinaisons, et en ce que l'opération effectuée par l'utilisateur est l'opération inverse de celle ayant permis d'obtenir les combinaisons de la seconde série, cette opération inverse étant effectuée avec une combinaison de la seconde série et la combinaison code.

6 - Procédé selon l'une quelconque des revendications 1 à 5, caractérisé en ce que les moyens de liaison sont combinés avec des moyens transformateurs.

7 - Procédé selon l'une quelconque des revendications 1 à 6, caractérisé en ce que les signes constitutifs des combinaisons de la ou des séries sont sélectionnés de façon aléatoire.

8 - Procédé selon l'une quelconque des revendications 1 à 7, caractérisé en ce que les combinaisons aléatoires ou pseudo-aléatoires, la combinaison code et la combinaison clé sont des

20

001049C

nombres, notamment des nombres décimaux ou des nombres binaires.

9 - Procédé selon l'une quelconque des revendications 1 à 8, caractérisé en ce que l'opération ou l'opération inverse conduisant à l'information adressée à l'ordinateur es· effectuée par l'utilisateur lui-même.

10 - Procédé selon l'une quelconque des revendications 1 à 8, caractérisé en ce que l'opération ou l'opération inverse conduisant à l'information adressée à l'ordinateur es. effectuée par des moyens auxiliaires éventuellement associés aux moyens de liaison.

11 - Procédé selon l'une quelconque des revendications 1 à 10, caractérisé en ce que l'opération ou l'opération inverse conduisant à l'information adressée à l'ordinateur est une opération arithmétique, notamment une addition.

12 - Application du procédé selon l'une quelconque des revendications 1 à 11, caractérisée en ce qu'on attribue à l'utilisateur une cassette contenant une bande sur laquelle sont imprimées, les unes à la suite des autres et dans un ordre prédéterminé, les combinaisons aléatoires ou pseudo-aléatoires qui lui sont attribuées.

13 - Application selon la revendication 10, caractérisée en ce que la bande est agencée pour constituer une suite de vignettes détachables, lesdites combinaisons aléatoires ou pseudo-aléatoires étant imprimées respectivement sur lesdites vignettes.

14 - Application selon la revendication 12 ou 13, caractérisée en ce que la cassette est munie de moyens mécaniques anti-retour interdisant la réintroduction d'une vignette.

# Fig.1.

1

13
3
5
2  10  12  11  4

# Fig.2.

7

9230  82|12396715  83|53622079

6  9  8  2  6 9  8

2

001049€

Fig.3.

21

22

23

24

25

Fig.4.

29 26 27 25 38

37

36

30 35

28

31 34 33

32

# RAPPORT DE RECHERCHE EUROPEENNE

Office eu...
des bre...

Numéro de la demande

001.0496

EP 79 40 0751

| Catégorie | Citation du document avec indication, en cas de besoin, des parties pertinentes | Revendication concernée |
|---|---|---|
| | US - A - 3 764 742 (ABBOTT)<br>* Abrégé ; figures 1A et 1B; colonne 2, ligne 32 - colonne 3, ligne 15; colonne 3, ligne 40 - colonne 6, ligne 55 * | 1,2, 4-7, 9,10 |
| | -- | |
| | US - A - 3 659 046 (ANGELERI)<br>* Abrégé; figure 1; colonne 1, ligne 19 à colonne 3, ligne 34 * | 1,3,4, 6,7,9, 10 |
| | -- | |
| | US - A - 3 513 298 (RIDDLE)<br>* Abrégé; colonne 4, ligne 40 à colonne 5, ligne 9; figures 1,2 * | 1,2 |
| | -- | |
| | FR - A - 2 019 390 (SMITHS INDUSTRIES)<br>* Revendications 1-4; page 1, ligne 10 à page 4, ligne 22; figures 2,3,6 * | 1,2, 11 |
| | -- | |
| A | FR - A - 2 349 899 (SAFAA)<br>* Revendications; figure 1 * | 1 |
| | -- | |
| A | FR - A - 2 178 766 (LE GRILL)<br>* Revendications; figures * | 1,12 |
| | -- | |
| A | FR - A - 2 174 151 (SMITHS INDUSTRIES)<br>* Revendications; figures 1,2 * | 1 |
| | -- | ./. |

**CLASSEMENT DE LA DEMANDE (Int. Cl. 3)**

G 07 C 11/00

**DOMAINES TECHNIQUES RECHERCHES (Int. Cl. 3)**

G 07 C 11/00
G 07 F 7/00
7/02
7/08
7/10
H 04 L 9/00
9/02
G 06 F 15/30 -
G 09 C 1/00 -
1/14
5/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 25-01-1980 | DAVID |

OEB Form 1503.1 06.78

Office européen
des brevets

RAPPORT DE RECHERCHE EUROPEENNE

EP 79 40 0751
-2-

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| A | <u>FR - E - 95 963</u> (C.I.T.)<br>* Résumé *<br><br>-- | 1 | |
| A | <u>US - A - 4 048 475</u> (YOSHIDA)<br>* Résumé; colonne 1, ligne 9 à colonne 3, ligne 44; figures *<br><br>-- | 1 | |
| A | <u>US - A - 3 938 091</u> (ATALLA)<br>* Résumé; colonne 1, ligne 37 à colonne 2, ligne 40; figures *<br><br>-- | 1 | **DOMAINES TECHNIQUES RECHERCHES (Int. Cl. 3)** |
| A | <u>US - A - 3 774 743</u> (HENDRICKSON)<br>* Résumé et figures *<br><br>-- | 1 | |
| A | <u>NL - A - 207 573</u> (REUMERMAN)<br>* Revendications et figure *<br><br>-- | 1 | |
| A | IBM TECHNICAL DISCLOSURE BULLETIN vol. 16, no. 7, décembre 1973, New York (US)<br>R.J. PREISS: "Self-modifying lockword for one-time use instruction", pages 2354 et 2355.<br>* Totalité du document *<br><br>-- | 1 | |
| A | AFIPS JOINT COMPUTER CONFERENCE 1977, vol. 46,<br>H.M. WOOD: "The use of passwords for controlling access to remote computer systems and services", pages 27-33.<br>* Totalité du document *<br><br>----- | 1 | |